(19) Europäisches Patentamt
European Patent Office
Office européen des brevets

(11) **EP 4 150 855 B1**

(12) **EUROPEAN PATENT SPECIFICATION**

(45) Date of publication and mention
of the grant of the patent:
**09.10.2024  Bulletin 2024/41**

(21) Application number: **21724318.7**

(22) Date of filing: **12.05.2021**

(51) International Patent Classification (IPC):
**H04L 9/08** *(2006.01)*

(52) Cooperative Patent Classification (CPC):
**H04L 9/0858**

(86) International application number:
**PCT/EP2021/062585**

(87) International publication number:
**WO 2021/228920 (18.11.2021 Gazette 2021/46)**

(54) **DEVICE-INDEPENDENT QUANTUM KEY DISTRIBUTION**

GERÄTEUNABHÄNGIGE QUANTENSCHLÜSSELVERTEILUNG

DISTRIBUTION DE CLÉS QUANTIQUES INDÉPENDANTE DU DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2020  EP 20174086**

(43) Date of publication of application:
**22.03.2023  Bulletin 2023/12**

(73) Proprietors:
• **ETH Zurich**
**8092 Zürich (CH)**
• **Universität Basel**
**4001 Basel (CH)**

(72) Inventors:
• **HO, Melvyn**
**81829 Munich (DE)**
• **SEKATSKI, Pavel**
**4102 Binningen (CH)**
• **BANCAL, Jean-Daniel**
**1226 Thônex (CH)**
• **SANGOUARD, Nicolas**
**78120 Clairefontaine-en-Yevelines (FR)**
• **TAN, Ernest**
**Singapur 448908 (SG)**
• **RENNER, Renato**
**6314 Unterägeri (CH)**

(74) Representative: **Schulz Junghans
Patentanwälte PartGmbB
Großbeerenstraße 71
10963 Berlin (DE)**

(56) References cited:
• **STEFANO PIRONIO ET AL: "Device-independent quantum key distribution secure against collective attacks", ARXIV.ORG, CORNELL UNIVERSITY LIBRARY, 201 OLIN LIBRARY CORNELL UNIVERSITY ITHACA, NY 14853, 25 March 2009 (2009-03-25), XP080317052, DOI: 10.1088/1367-2630/11/4/045021**
• **M. HO ET AL: "Noisy Preprocessing Facilitates a Photonic Realization of Device-Independent Quantum Key Distribution", PHYSICAL REVIEW LETTERS, vol. 124, no. 23, 1 June 2020 (2020-06-01), US, XP055739049, ISSN: 0031-9007, DOI: 10.1103/PhysRevLett.124.230502**
• **RENNER R ET AL: "An information-theoretic security proof for QKD protocols", ARXIV.ORG, CORNELL UNIVERSITY LIBRARY, 201 OLIN LIBRARY CORNELL UNIVERSITY ITHACA, NY 14853, 11 February 2005 (2005-02-11), XP080192318, DOI: 10.1103/PHYSREVA.72.012332**

**Description**

The invention relates to a method for device-independent quantum key generation and distribution between a first and a second receiver.

Quantum key distribution (QKD) is well known in the art. One specific kind of QKD with device independent security guarantees which does not require knowledge about any details on the device is the so-called device-independent quantum key distribution.

However, one drawback of device-independent quantum key distribution applications is that the detection efficiency of Alice (A) and Bob (B), i.e. a first and a second receiver that are to generate and distribute the shared quantum key has to be so high (>92%) that practical applications and implementations on consumer devices are almost out of reach. This is for example described in "Pironio, Stefano et al. "Device-Independent Quantum Key Distribution Secure Against Collective Attacks." New Journal of Physics 11.4 (2009): 045021".

The present application discloses an elegant and surprising solution for this problem, by providing a method that allows for quantum key distribution at significantly lower detection efficiencies.

The object of the invention is achieved by the method having the features of claim 1.

Advantageous embodiments are described in the subclaims.

According to a first aspect of the invention, a method, particularly a computer-implemented method for device-independent quantum key generation and distribution between a first and a second receiver, comprises the steps of:

a) Generating particularly a single, quantum mechanically entangled information pair, comprising two quantum mechanically entangled quantum moieties, such as photons or other particles that have at least one degree of freedom entangled with each other that can be measured as a quantum state, such as a polarization,

b) Transmitting, particularly via a quantum channel a first entangled quantum moiety of the two entangled quantum moieties to the first receiver (A) and a second entangled quantum moiety of the two entangled quantum moieties to the second receiver (B),

c) At the first receiver (A) receiving and measuring the entangled quantum state of the first entangled quantum moiety with a selected detection setting A* that is chosen from at least three predefined detection settings $A_0$, $A_1$, or $A_2$, wherein a measurement value $a_0$, $a_1$, $a_2$ representative of the outcome of the measurement at the first receiver is stored with and associated to the selected detection setting A*,

d) At the second receiver (B) receiving and measuring the entangled quantum state of the second quantum moiety with a selected detection setting B* that is chosen from at least two predefined detection settings $B_1$ or $B_2$, wherein a measurement value $b_1$, $b_2$ representative of the outcome of the measurement at the second receiver is stored with and associated to the selected detection setting B*, executing steps e) and f) in arbitrary order,

e) Repeating the steps a) to d) and/or step f), particularly wherein step f) is repeated when step f) precedes step e), such that a plurality of measurement values $a_0$, $a_1$, $a_2$ measured with the associated detection settings $A_0$, $A_1$ and $A_2$, for the measurements at the first receiver (A) is obtained, particularly generated and stored at the first receiver (A) and such that a plurality of the measurement values $b_1$ and $b_2$ measured with the associated detection settings $B_1$ and $B_2$ for the measurements at the second receiver (B) is obtained, particularly generated and stored, at the second receiver (B),

f) In a modification step, assigning each measurement value $b_1$ from the plurality of measurement values $b_1$, when step e) is executed prior to step f) measured with detection setting $B_1$ with a noise-probability p a complementary value $b_1^*$ , wherein the noise-probability p is larger than 0 and lower than 1, particularly wherein the noise-probability p is larger than 0 and smaller than 0.5, or particularly wherein the noise-probability p is larger than 0.5 and smaller than 1, such that a modified plurality of measurement values $\widetilde{b_1^*}$ is obtained after executing step e),

g) Generating a final shared quantum key from the modified plurality measurements values $\widetilde{b_1}$ and from the plurality of measurement values $a_0$ measured at the first receiver (A).

The invention allows for a lower detection efficiency for the entangled moieties at the first and the second receiver, such that quantum key distribution becomes possible with a lower detection efficiency and a higher quantum key generation rate (which translates in a shorter generation and distribution time). Particularly, the method according to the invention allows for accessing a range of detection efficiencies that are not possible with device-independent key distribution methods known in the art.

The term "detection efficiency" particularly relates to a detection efficiency relating to an overall detection efficiency of the method. For example, the detection efficiency accounts for quantum moiety losses during transmission and a detector efficiency at the first and the second receiver.

Particularly, the noise probability cannot be controlled by the third receiver.

According to another embodiment of the invention, the measurement value $b_1$ is intrinsically affected by noise such that a true measurement value cannot be obtained. This noise is referred to as intrinsic noise or local noise in the following. Local noise can for example be caused by inherently generated noise by the second receiver, for example by inherent detector noise at the measurement with the detection setting $B_1$.

While this local noise might be present in almost all measurements, it is noted that in contrast to the art, a noise probability introduced by the local noise, as long as it is known to, i.e. quantifiable by the second receiver, can be accounted for in subsequent method steps for calculation of a correlation value.

In this case (when already the measurement value $b_1$ is affected by intrinsic noise and the intrinsic noise is known to the second receiver), it is still possible to infer subsequently calculated values, such the correlation value by correcting for the intrinsic noise contribution.

The method according to the invention further provide improved security in case local noise at the second receiver is known and cannot be controlled by a third receiver interfering with the quantum key distribution. Also in this case, a positive key generation rate is obtained with reduced requirement on the detection efficiency.

As long as the key generation rate is positive, the key can be used for various applications such as secure communication between the first and the second receiver. A low key generation rate particularly requires the transmission of more entangled moieties to the first and the second receiver, as compared to a higher key generation rate.

It is known that in device-dependent quantum key distribution methods, noisy preprocessing helps improving a resistance against external noise. However, the inventors surprisingly found that according to the method of invention the modification step f) allows for reducing detection efficiency at the first and the second receiver. This effect is not observed and expected by device-independent quantum key distribution methods.

Furthermore, a reduction of the critical detection efficiency according to the invention from 90.9% (as known in the art) down to 83.2% by executing the method of the invention constitutes a relative tolerance improvement of 78%, i.e. the method almost doubles the admissible imperfections compared to what is known in the art. This in turn allows for a realistic option for realizing device-independent quantum key distribution on every day devices.

In comparison, noise-preprocessing in device independent provides only about 13% relative improvement over know protocols such as BB84.

The inventors were able to derive a technically very difficult fully device-independent security proof that includes the modification step f). Proof techniques aside, the method according to the invention surprisingly reduces the constraints on the detection efficiency as elaborated previously.

A quantum key comprises for example a sequence of bits, particularly referred to as "string". The quantum key can be used to process data and exchange data securely via a public transmission channel, i.e. a channel that can be recorded by third receivers without the first and the second receiver noticing.

The term "final shared quantum key" particularly refers to the quantum key that might have been modified by additional error correction or privacy amplification protocols and that is known to the first and second receiver.

The entangled information pair particularly consists of two moieties that can be separated spatially.

The term "entangled" as used in the specification particularly relates to a quantum mechanical entanglement of moieties, which in short refers to a situation in which a state of an entangled moiety cannot be described independently without the state of the at least other entangled moiety.

Particularly, at least one degree of freedom of the entangled moieties is entangled. This degree of freedom is for example a polarization, a time bin or frequency bin entanglement, an energy-time entanglement, a path or an orbital angular momentum entanglement.

According to another embodiment of the invention, the entangled moieties are one of photons, electrons, atoms, ions or superconducting Cooper pairs.

According to another embodiment of the invention, the entangled moiety pairs are polarization-entangled photons.

According to an embodiment of the invention, the quantum mechanically entangled moieties are generated by means of spontaneous parametric down-conversion.

Particularly, at least one degree of freedom of the quantum moieties is entangled, wherein the quantum state of the said entangled degree of freedom is measured by the first and the second receiver.

In this sense, the entangled degree of freedom is equivalently referred to as "entangled quantum state" in the current specification.

According to another embodiment of the invention, the entangled moieties are generated at an entanglement source, particularly with an entanglement generating module.

According to another embodiment of the invention, the entanglement source, particularly the entanglement generating module is comprised by the first or the second receiver.

Alternatively, the entanglement source, particularly the entanglement generating module is comprised by an external device that is not comprised by the first or the second receiver.

According to another embodiment of the invention, the entanglement generating module is a quantum network with a plurality of receivers, so-called nodes, wherein the quantum network provides the entangled moieties to the first and the second receiver which are two of its nodes.

In either case, the generated entangled moieties are transmitted at least from the entanglement source, particularly from the entanglement generating module to the first and the second receiver particularly by the quantum channel.

The term "quantum channel" particularly refers to a kind of information transmission, which according to the invention is via entangled moieties. The term quantum channel is particularly used in contrast to the term "public transmission channel" which in turn refers to conventional information transmission, e.g. with radio-wave, or non-entangled photons, i.e. classical light.

Transmission of the entangled moieties can take place in free space directly or via satellite transmission or by means of photonic fibre guidance.

For measuring the state of the first moiety, the first receiver comprises a measurement device configured to measure said state, wherein the first receiver, particularly the measurement device further comprises a detection selector for providing the selected detection setting.

The choice of the detection settings for the first receiver is made randomly, but at least independently from the entanglement source and/or a third receiver. In case, the choice of detection settings is even partially correlated for example to the entanglement source, the security of the quantum key generation and distribution can be corrupted by a third receiver, e.g. an eavesdropper, controlling appropriately the quantum states of the transmitted moieties.

Without loss of generality the measurement values measured at the first receiver associated to the detection setting

- $A_1$ are referred to as $a_1$,
- $A_2$ are referred to as $a_2$,
- $A_0$ are referred to as $a_0$.

Similarly, without loss of generality the measurement values $b_i$ measured at the second receiver associated to the detection setting

- $B_1$ are referred to as $b_1$,
- $B_2$ are referred to as $b_2$.

The measurement values $a_0$, $a_1$, $a_2$ are stored for example on a memory storage of the first receiver associated to the associated measurement settings $A_0$, $A_1$, $A_2$.

According to another embodiment of the invention, the memory storage of the first receiver is a trusted device or system, e.g. it is not controlled or accessible by a third receiver, e.g. an eavesdropper.

The detection settings $A_0$, $A_1$, $A_2$, $B_1$ and $B_2$ each define a measurement basis for the quantum state of the entangled moiety, wherein each detection setting at the first receiver differs from each other and wherein each detection settings B1 and B2 at the second receiver differ from each other.

According to another embodiment of the inven-

tion, $A_0$ and $A_1$ are detection settings that correspond to two non-identical bases of the quantum state of the first moiety. Particularly, since the method according to the invention is device-independent, it does not rely on a specific implementation of the detection settings. Therefore, the detection settings can be almost arbitrary chosen. An informed choice of the detection settings can be determined according to a later embodiment referring to a correlation value.

According to another embodiment of the invention, the detection settings $A_0$ and $B_1$ are used for the key generation, while $A_1$, $A_2$ and $B_1$, $B_2$ are used for parameter estimation, for the correlation value, such as a later discussed CHSH value.

The choice of the detection setting for the second receiver is made randomly or at least independently from the first receiver, the entanglement source and/or a third receiver. In case, the choice of detection settings is even partially correlated for example to the entanglement source, the security of the quantum key generation and distribution can be corrupted by a third receiver, e.g. an eavesdropper, controlling appropriately the quantum states of the transmitted moieties to the second receiver.

The measurement values $b_1$, $b_2$ are stored for example on a memory storage of the second receiver associated to the respective measurement settings $B_1$, $B_2$.

According to another embodiment of the invention, the memory storage of the second receiver is a trusted device or system, e.g. it is not controlled are accessible by a third receiver, e.g. an eavesdropper.

According to another embodiment of the invention, the modified plurality measurement values $\widetilde{b_1}$ as well as the plurality of measurement values $b_1$, are stored for example on a memory storage of the second receiver.

Particularly, the steps a) to d) are repeated more than 100,000 times, particularly more than 1,000,000 times, more particularly more than 10,000,000 times.

Each obtained plurality of the measurement values $a_0$, $a_1$, $a_2$ is particularly an ordered and/or and indexed set of measurement values that is for example sorted according to the time of measurement at the first receiver.

Similarly, each obtained plurality of the measurement values $b_1$, $b_2$ as well as the modified plurality of measurement values $\widetilde{b_1}$ is particularly an ordered and/or and indexed set of measurement values that is for example sorted according to the time of measurement at the second receiver.

For sake of clarity it is noted that the plurality of modified measurement values $\widetilde{b_1}$ can comprise non-modified measurement values $b_1$, as the measurement values $b_1$ are modified only with a noise-probability $p$.

Particularly, all measurement values $b_1$ are

stored prior the modification step, such that all original measurement values $b_1$ are available to the second and particularly to the first receiver. The term "original" refers to the measured measurement value prior to the modification step that might alter the measurement value $b_1$.

Similarly, the modified plurality is stored at the second receiver such that the modified plurality of measurement values is available to the second and particularly to the first receiver.

The inventors have recognized that surprisingly - noise probabilistically in the key generating measurement results - a secure quantum key distribution is possible which requires a lower detection efficiency. This in turn allows quantum key distribution at less demanding specifications. It is remarkable that while the addition of noise reduces the correlations between the key generating rounds, a lower detection at the first and the second receiver is required for successfully obtaining a quantum key with device-independent security guarantees.

A term "key generating round" particularly refers to the transmission of one entangled quantum moiety pair to the first and the second receiver.

Therefore, the modification step f) is a crucial and particularly distinguishing step of the method over the art.

In this step, noise is applied to the measurement values $b_1$, wherein said noise particularly flips with the noise-probability p the particularly binary measurement values $b_1$ to the respective complementary value, e.g. from 0 to 1 or from 1 to 0.

A strength of the noise can be adjusted by adjusting the noise-probability p with which the measurement values $b_1$ are selected and modified. The noise can therefore be expressed as having the noise-probability p.

According to another embodiment of the invention, the noise-probability is provided and/or transmitted to the second receiver, such that the second receiver knows the noise-probability, particularly such that only the second receiver knows the noise-probability.

According to another embodiment of the invention, the noise-probability p is controlled by the second receiver, particularly only the second receiver.

According to another embodiment of the invention, the noise-probability p comprises a local noise, particularly environmental noise that is for example caused by a detector of the second receiver.

Particularly, the local noise cannot be controlled by the third receiver.

Particularly, the noise-probability comprises a noise component that is adjustable and/or controllable by the second receiver, but particularly not by a third receiver, interfering with the quantum key distribution method.

According to another embodiment of the invention, the noise-probability is adjusted by the second receiver.

It is explicitly noted that it is well within the meaning of claim 1 that step e) and step f) can be merged or the order of the steps e) and f) can be reversed.

Therefore, a first embodiment is for example given by potentially modifying the measurement value $b_1$ with the noise-probability each time a measurement has been performed with the detection $B_1$ such that by repeating steps a) to d) and f) the pluralities of measurement values $a_0$, $a_1$, $a_2$, $b_1$, $b_2$, and $\widetilde{b_1}$ are obtained.

Alternatively, a second embodiment of the invention is for example given by first repeating the steps a) to d) such that the pluralities of measurement values $a_0$, $a_1$, $a_2$, $b_1$, and $b_2$, are obtained and then executing step f) on the plurality of measurement values $b_1$ such that the modified plurality of measurement values and $\widetilde{b_1}$ is obtained.

Step g) particularly comprises the steps of determining a probability of a third receiver (E) interfering with the transmission of the entangled moieties, an error correction method and a privacy amplification method.

According to another embodiment of the invention, the measurement values $a_1$ measured with detection setting $A_1$ and measurement values $a_2$ measured with detection setting $A_2$, as well as the measurement values $b_1$ measured with detection setting $B_1$ and thus also the modified plurality of measurement values $\widetilde{b_1}$ and measurement values $b_2$ measured with detection setting $B_2$ are binary values.

According to another embodiment of the invention, the measurement values $a_1$ associated to detection setting $A_1$ are binary values.

According to another embodiment of the invention, the measurement values $a_2$ associated to detection setting $A_2$ are binary values.

According to another embodiment of the invention, the measurement values $b_1$ associated to with detection setting $B_1$ are binary values.

According to another embodiment of the invention, the measurement values $b_2$ associated to detection setting $B_2$ are binary values.

According to another embodiment of the invention, the complementary measurement values $b_1^*$ are binary values.

Particularly, any measurement value $a_0$ for detection setting is a non-binary value.

According to another embodiment of the invention, the generation of the final shared key comprises executing an error correction method at least on the modified plurality of measurement values $\widetilde{b_1}$ associated to detection setting $B_1$ and the measurement values $a_0$ associated to the detection setting $A_0$ configured to correct any errors from the transmission of the entangled moieties, for example transmission and/or reception errors in the transmission of the entangled moieties to the first and the second receiver, particularly wherein a raw key at the first and the second receiver is obtained after the error correction method is successfully executed.

The error correction method particularly reduces any errors between the information held by the first and the second receiver.

According to another embodiment of the invention, the following steps are executed to determine a probability of a third receiver interfering with the transmission to the entangled moieties to the first and the second receiver via the quantum channel:

- Determining for the plurality of measurement values $a_1$, $a_2$, and $b_1$, $b_2$ a correlation value $S$, wherein said correlation value $S$ is sensitive to local causality and is further configured to rule out local causality, particularly wherein S configured to be used for a Bell test, particularly wherein the correlation value $S$ is a CHSH coefficient value,
- Particularly adjusting the correlation value $S$ for the contribution of the intrinsic noise in the measurement values $b_1$,
- Evaluating the correlation value $S$, particularly the adjusted correlation value, wherein if said correlation value $S$ is below a predefined threshold value, an alarm will be issued or the first and the second receiver are informed that a third particularly intermediate receiver has interfered with the transmission of the entangled moieties or the transmission noise is too high.

Particularly, the correlation value $S$ is sensitive to locally causal models; under this hypothesis S is bounded by maximum value, e.g. $S \leq 2$ in the case of CHSH, which can be exceeded by quantum measurements $S > 2$ observed during the protocol.

It is noted that the correlation value $S$ is determined from the unmodified measurement values $b_1$ and particularly not from the modified plurality of measurement values $\widetilde{b_1}$. However, as noted above, the unmodified measurement values $b_1$ might be affected by intrinsic noise.

An important reason to compute S is to make sure that a third receiver, e.g. an eavesdropper has not sufficient information for anticipating the final key

According to another embodiment the detection settings $A_1$, $B_1$, $A_2$, and $B_2$ are chosen such that the correlation value $S$ is maximized.

This embodiment allows making an informed choice regarding the detection settings $A_1$, $A_2$, $B_1$, and $B_2$.

The measurement values associated to the detection settings $A_1$, $A_2$, $B_1$ and $B_2$ are used to estimate the correlation value $S$. The magnitude of the correlation value $S$ particularly provides information on the quality of the entangled state of the entangled moiety pair.

Therefore, when each of the entangled moiety pairs is indeed perfectly entangled and the entangled moieties have not lost their entanglement due to environmental factors when arriving at the first or the second receiver, the detection settings $A_0$ and $B_1$ may provide identical or at least perfectly correlated measurement values $a_0$ and $b_1$.

According to another embodiment of the invention, the generation of the final shared key comprises executing a privacy amplification method at least on the modified plurality of measurement values $\widetilde{b_1}$ and the measurement values $a_0$ particularly on the raw key, configured to minimize an amount of information possibly available to a third receiver about the final shared quantum key, particularly wherein the privacy amplification method is configured to reduce the amount of information possibly available to a third receiver about the final shared quantum key below predefined threshold value.

According to another embodiment of the invention, if the third receiver interferes with the generation of the final shared quantum key, the method is aborted and/or repeated.

Whether or not the third receiver interferes is for example determined by the correlation value S. Particularly, as long as the first and the second receiver are able to receive some entangled moieties without interference of the third receiver, a final shared quantum key might be generated and distributed.

According to another embodiment of the invention, the detection settings $A_0$, $A_1$, $A_2$ comprise at least two non-identical bases for detecting the quantum state of incident quantum moieties, particularly wherein detection setting $A_0$ and $A_1$ form two non-identical bases for detecting the quantum moieties at the first receiver (A).

According to another embodiment of the invention, the detection settings $B_1$, $B_2$ comprise at least two non-identical bases for detecting the quantum state of incident quantum moieties.

This embodiment allows the method for example to be executed according to the known E91 protocol (Ekert, Artur K. (5 August 1991). "Quantum cryptography based on Bell's theorem". Physical Review Letters. 67 (6): 661-663.) or the BB92 protocol.

According to another embodiment of the invention, the noise-probability p is smaller than 0.3, particularly smaller than 0.2, more particularly smaller than 0.1.

According to another embodiment of the invention, the noise-probability p is larger than 0.7, particularly larger than 0.8, more particularly larger than 0.9.

The optimal value of the noise-probability $p$ for a first and second receiver can be very close to 0, or very close to 1.

For example, in polarization entangled photon applications with detection efficiencies close to 0.9, $p$ might be chosen very close to 1.

For the same setup but detection efficiencies above 0.95, the noise probability $p$ might be chosen very close to 0.

Typically, intermediate values of the noise probability $p$ only correspond to intermediate regimes of detection efficiencies.

According to another embodiment of the invention, the transmitted entangled quantum moieties are detected at the first and/or second receiver (A, B) with a probability lower than 0.95, particularly lower than 0.9, more particularly lower than 0.85.

In the art detection efficiency of the first and the second receiver have to be higher than 0.92 for photonic applications for device-independent quantum key distribution in order to allow any quantum key generation.

According to the invention, the detection efficiency can be lower than in the art, while still allowing for device-independent quantum key generation.

According to another embodiment of the invention, the generated final shared quantum key, is used by the first or the second receiver (A, B) for encrypting an information, wherein the first or the second receiver (A, B) sends the encrypted information, particularly via a public transmission channel, such as by means of radio waves, to the respective other receiver (B, A), i.e. the second or the first receiver, wherein at the second or first receiver (B) the generated final shared quantum key is used to decrypt the received encrypted information.

According to another embodiment of the invention, the generated final shared quantum key, is used by the first or the second receiver (A, B) for authentication of information.

According to a second aspect of the invention, a system is disclosed for device-independent quantum key distribution.

According to this aspect a system for executing the method according to the invention comprises a second receiver (B), wherein the second receiver (B) is configured to

- detect incident entangled quantum moieties with at least two different detection setting $B_1$ and $B_2$ with a detector of the second receiver,

- generate for each measurement a value $b_1$, $b_2$ representative for the measurement outcomes preformed with one of the randomly chosen detection setting $B_1$ or $B_2$,

- store the measurement values $b_1$, $b_2$ associated to the randomly chosen detection setting on a data storage of the second receiver, wherein the second receiver (B) comprises a noise generator, wherein said noise generator is configured modify the measurement values $b_1$ by introducing noise to measurement values $b_1$ associated to the detection setting $B_1$,

- particularly store the modified measurement values in the data storage.

The terms and definition disclosed on the context of the method according to the invention are applicable similarly to the system according to the invention.

The noise generator can be a random number generator.

According to another embodiment of the invention, the noise generator is particularly connected to the data storage such as to receive the measurement values $b_1$ associated to the detection setting $B_1$ and from the received measurement values $b_1$ to invert randomly selected measurement values $b_1^*$ of the plurality of measurement values $b_1$ with a noise-probability p and to store the inverted measurement values $\widetilde{b_1^*}$ and the non-inverted measurement values $b_1$ as a modified plurality of measurement values $\widetilde{b_1}$ in the data storage.

Particularly, the plurality of measurement values $b_1$ is not overwritten by the modified plurality of measurement values, but both pluralities are stored and available to the second receiver.

According to another embodiment of the invention, the system comprises

- a first receiver (A), wherein the first receiver is connected to the second receiver with a public transmission channel for exchanging information particularly via radio waves, wherein the first receiver is configured to

    a) detect incident entangled quantum moieties with at least three different detection setting $A_0$, $A_1$, and $A_2$ with a detector of the first receiver,
    b) generate measurement values $a_0$, $a_1$, $a_2$ representative for the measurement outcomes preformed with one of the randomly chosen detection setting $A_0$, $A_1$, $A_2$,
    c) store the measurement values associated to the randomly chosen detection setting on a data storage of the first receiver,

- an entanglement source configured to generate and distribute entangled, particularly polarization entangled moiety pairs, particularly single entangled moiety pairs, wherein the entanglement source is configured to transmit or distribute a first entangled moiety of the entangled moiety pair to the first receiver and a second entangled moiety of the entangled moiety pair to the second receiver, particularly wherein the entanglement source is a photon source configured to generated entangled photons, particularly polarization entangled photons,
- particularly wherein a detection probability for distributed entangled quantum moieties is lower than 0.95, particularly lower than 0.9, more particularly lower than 0.85 at the first and/or the second receiver.

According to another embodiment of the invention, the first receiver comprises an adjustable detection setting device configured to adjust the detection settings to the selected detection setting at the first receiver, wherein the detection setting device comprises for example an optical analyser.

According to another embodiment the first receiver comprises a computer for randomly selecting the detection settings.

According to another embodiment the second receiver comprises a computer for randomly selecting the detection settings.

According to another embodiment of the invention, the second receiver comprises an adjustable detection setting device configured to adjust the detection settings to the selected detection setting at the second receiver, wherein the detection setting device comprises for example an optical analyser.

According to another embodiment of the invention, the first receiver comprises a first detector configured to detect the first moiety.

According to another embodiment of the invention, the first receiver comprises a second detector configured to detect the second moiety.

According to a third aspect a computer program is disclosed that is configured to execute computer-implemented steps of the method according to the invention, when the computer program is executed on a computer, particularly wherein a first computer with the computer program is comprised by and operationally connected to the first receiver and a second computer is comprised by and operationally connected to the second receiver.

According to a fourth aspect of the invention, a method, particularly a computer-implemented method for essentially device-independent quantum key generation and distribution between a first and a second receiver, comprises the steps of:

a) Generating particularly a single, quantum mechanically entangled information pair, comprising two quantum mechanically entangled quantum moieties, such as photons or other particles that have at least one degree of freedom entangled with each other that can be measured as a quantum state, such as a polarization,

b) Transmitting, particularly via a quantum channel a first entangled quantum moiety of the two entangled quantum moieties to the first receiver (A) and a second entangled quantum moiety of the two entangled quantum moieties to the second receiver (B),

c) At the first receiver (A) receiving and measuring the entangled quantum state of the first entangled quantum moiety with a selected detection setting A* that is chosen from at least three predefined detection settings $A_0$, $A_1$, or $A_2$, wherein a measurement value $a_0$, $a_1$, $a_2$ representative of the outcome of the measurement at the first receiver is stored with and associated to the selected detection setting A*,

d) At the second receiver (B) receiving and measuring the entangled quantum state of the second quantum moiety with a selected detection setting B* that is chosen from at least two predefined detection settings $B_1$ or $B_2$, wherein a modified measurement value $b_1^*$ and/or a measurement value $b_2$ representative of the outcome of the measurement at the second receiver (B) is stored with and associated to the selected detection setting B*, executing steps e) and f) in arbitrary order, wherein the modified measurement value $b_1^*$, is affected by noise that corrupts the outcome of the measurement with the detection setting $B_2$ such that a measurement value $b_1$ that would have been obtained with the measurement setting $B_2$ is modified with a noise probability $p$ to a complementary value $b_1^*$, wherein the noise-probability $p$ is larger than 0 and lower than 1, particularly wherein the noise-probability $p$ is larger than 0 and smaller than 0.5, or particularly wherein the noise-probability p is larger than 0.5 and smaller than 1,

e) Repeating the steps a) to d) such that a plurality of measurement values $a_0$, $a_1$, $a_2$ measured with the associated detection settings $A_0$, $A_1$ and $A_2$, for the measurements at the first receiver (A) is obtained, particularly generated and stored at the first receiver (A) and such that a plurality of the modified measurement values $\widetilde{b_1}$ and a plurality of measurement values $b_2$ measured with the associated detection settings $B_1$ and $B_2$ for the measurements at the second receiver (B) is obtained, particularly generated and stored, at the second receiver (B),

f) Generating a final shared quantum key from the modified plurality measurements values $\widetilde{b_1}$ and from the plurality of measurement values $a_0$ measured at the first receiver (A).

According to this aspect of the invention, at least the measurement value $b_1$ is intrinsically affected by noise such that the true measurement value $b_1$ cannot be obtained. This can for example be caused by inherently generated noise by the second receiver, for example by inherent detector noise at the measurement with the detection setting $B_1$.

While this local noise might be present in almost all measurements, it is noted that in contrast to the art, the noise probability introduced by the local noise, as long as it is known to, i.e. quantifiable by the second receiver, can be accounted for in subsequent method steps for calculation of a correlation value.

In this case (when only the modified measurement values $\widetilde{b_1}$ and the local noise are known to the second receiver), it is still possible to infer subsequently calculated values, such the correlation value by correcting for the local noise contribution.

Therefore, according to another embodiment of the fourth aspect, the following steps are executed to determine a probability of a third receiver interfering with the transmission to the entangled particles to the first and the second receiver via the quantum channel:

- Determining for the plurality of measurement values $a_1$, $a_2$, and $\widetilde{b_1}$, $b_2$ a correlation value $S$, wherein said correlation value $S$ is sensitive to local causality and is further configured to rule out local causality, particularly wherein $S$ configured to be used for a Bell test, particularly wherein the correlation value is a CHSH coefficient value,
- Particularly adjusting the correlation value for the contribution of the noise in the modified measurement values $\widetilde{b_1}$,
- Evaluating the correlation value $S$, particularly the adjusted correlation value $S$, wherein if said correlation value $S$ is below a predefined threshold value, an alarm will be issued, particularly indicating that there might be a third receiver interfering with the transmission of the quantum moieties or that a transmission noise is too high.

It is noted that all embodiments disclosed for any of the first to third aspect of the invention are also applicable to the fourth aspect of the invention in so far they are adjusted for the influence of the modified measurement values $\widetilde{b_1}$ if necessary.

It is also noted that the methods according to the first aspect and the fourth aspect can be combined such the intrinsic noise (according to the fourth aspect) and noise purposefully added (according to the first aspect) to the measurement values $b_1$ yield the modified measurement values $\widetilde{b_1}$.

The term 'operationally connected' denotes a computerized network connection or communication via a network, e.g. a cellular network, wireless network such as radio, Bluetooth or WiFi, a wired network such a Local Area Network (LAN) or Wide Area Network (WAN), as well as a connection via the internet. Particularly, the public channel might be established on a computerized network.

The term "computerized device" or "computerized system" or a similar term denotes an apparatus comprising one or more processors operable or operating according to one or more programs.

The terms 'processor' or 'computer', or system thereof, are used herein as ordinary context of the art, such as a general purpose processor or a micro-processor, RISC processor, or DSP, possibly comprising additional elements such as memory or communication ports. Optionally or additionally, the terms 'processor' or 'computer' or derivatives thereof denote an apparatus that is capable of carrying out a provided or an incorporated program and/or is capable of controlling and/or accessing data storage apparatus and/or other apparatus such as input and output ports. The terms 'processor' or 'computer' denote also a plurality of processors or computers connected, and/or linked and/or otherwise communicating, possibly sharing one or more other resources such as a memory.

As used herein, the term 'server' denotes a computerized device providing data and/or operational service or services to one or more other computerized devices or computers.

The terms 'software', 'program', or 'code' or 'application' may be used interchangeably according to the context thereof, and denote one or more instructions or directives or circuitry for performing a sequence of operations that generally represent an algorithm and/or other process or method. The program is stored in or on a medium such as RAM, ROM, or disk, or embedded in a circuitry accessible and executable by an apparatus such as a processor or other circuitry.

The processor and program may constitute the same apparatus, at least partially, such as an array of electronic gates, such as FPGA or ASIC, designed to perform a programmed sequence of operations, optionally comprising or linked with a processor or other circuitry.

As used herein, without limiting, a module represents a part of a system, such as a part of a program operating or interacting with one or more other parts on the same unit or on a different unit, or an electronic component or assembly for interacting with one or more other components.

As used herein, without limiting, a process represents a collection of operations for achieving a certain objective or an outcome.

The term 'configuring' and/or 'adapting' for an objective, or a variation thereof, implies using at least a software and/or electronic circuit and/or auxiliary apparatus designed and/or implemented and/or operable or operative to achieve the objective.

A device storing and/or comprising a program and/or data constitutes an article of manufacture. Unless otherwise specified, the program and/or data are stored in or on a non-transitory medium.

In the context of embodiments of the present disclosure, by way of example and without limiting, terms such as 'operating' or 'executing' imply also capabilities, such as 'operable' or 'executable', respectively.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

Fig. 1    a flow chart of a first embodiment of the method according to the invention;

Fig. 2    a flow chart of a second embodiment of the method according to the invention;

Fig. 3    a first embodiment of a system according to the invention; and

Fig. 4    a second embodiment of a system according to the invention.

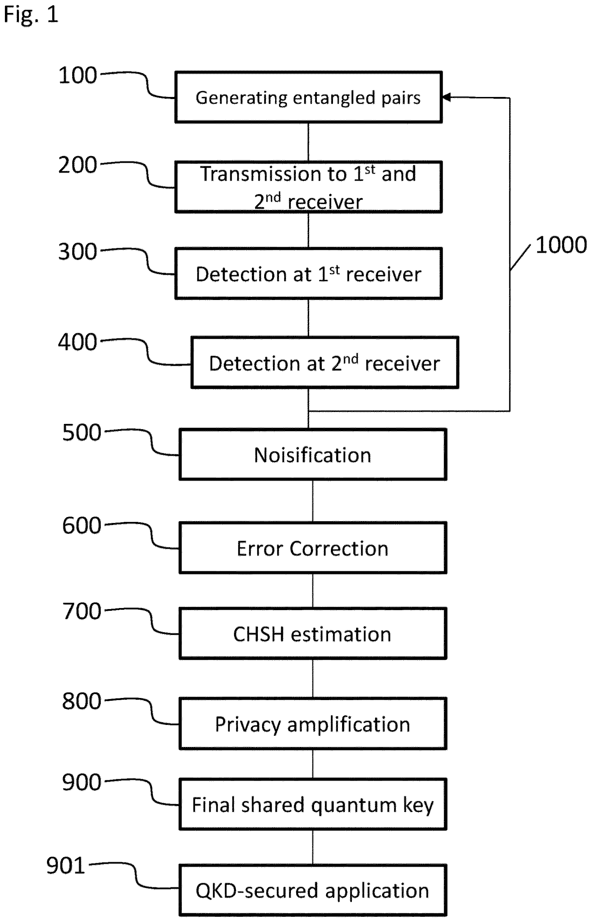

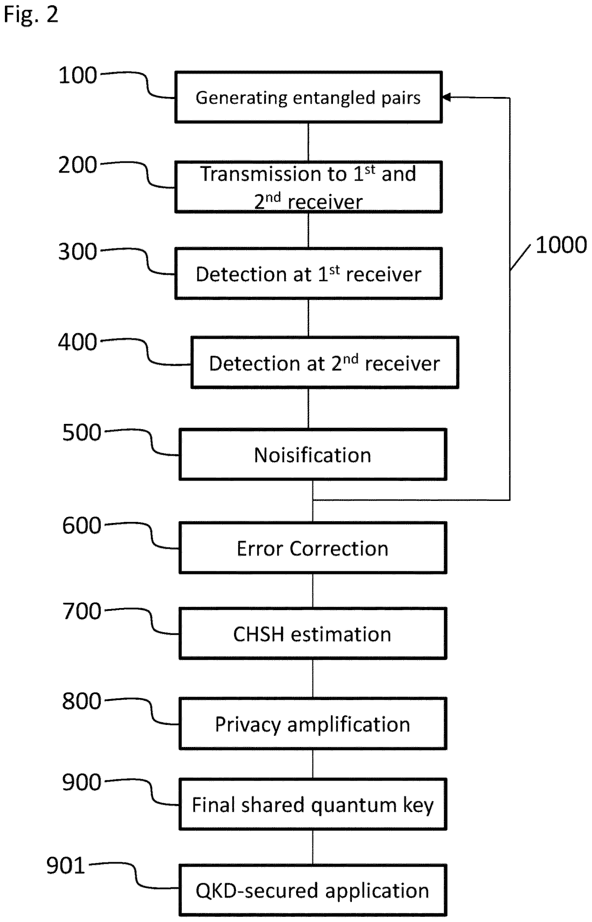

In Fig. 1 and Fig. 2 a schematic flow chart for the method according to the invention is shown. Steps a) to d) are identical for both exemplary embodiments shown in Fig. 1 and Fig. 2.

For illustrative purpose the entangled moieties are polarization entangled photons. However, it is explicitly noted that the examples can readily expanded to other entangled moieties and thus are to be understood in a non-limiting way.

In step 100 a polarization-entangled photon pair is generated 100 by an entanglement source 10, for example a spontaneous parametric down-conversions light source.

The entanglement source 10 is particularly configured to produce single photon pairs.

In step 200 a first photon of the entangled photon pair is provided to the first receiver A and a second photon of the entangled photon pair is provided to the second receiver B.

The polarization of the first and the second photon are orthogonal to each other.

At the first receiver A the first photon is detected in a detection step 300 with a first detection efficiency and in a detection step 400 at the second receiver B the second photon is detected with a second detection efficiency.

At the first receiver A, a predefined detection setting $A_0$, $A_1$ or $A_2$ is randomly chosen for measuring the photon's polarization on a basis that is defined by the respective detection setting. The detection setting is one of $A_0$, $A_1$ or $A_2$. The detection settings $A_0$, $A_1$ or $A_2$ correspond to polarization detection settings that measures the polarization of the photon on three different bases, $A_0$, $A_1$, $A_2$. This is shown in step c) of Fig. 1 and Fig. 2.

The random choice of the detection settings can be done using a random number generator, particularly quantum random number generator.

Similarly, at the detection step 400, at the second receiver B a predefined detection setting $B_1$ or $B_2$ is randomly chosen for detecting the photon's polarization on a basis that is defined by the respective detection setting $B_1$ or $B_2$ at the second receiver B. The detection setting $B_1$ or $B_2$ at the second receiver B is either $B_1$ or $B_2$. The detection settings $B_1$ or $B_2$ correspond to polarization detection settings that measure the polarization of the second photon on two different bases $B_1$, $B_2$.

A protocol for generating a shared quantum key using said detection settings at the first and the second receiver and the interrelation of the detection settings is for example provided in Stefano Pironio et al. 2009 New J. Phys. 11 045021.

The detection settings at the first receiver A are for example selected by means of an independently adjustable optical analyzer 16-1 comprised by the first receiver A. The first receiver A comprises a first detector 14-1 configured and adapted to detect and assign the incident photon after passing the analyzer 16-1 to the measurement value.

The detection settings at the second receiver B are for example selected by means of an independently adjustable optical analyzer 16-2 comprised by the second receiver B. The second receiver B comprises a second detector 14-2 configured and adapted to detect and assign the incident photon after passing the analyzer 16-2 to the measurement value.

For example, the detector setting $A_0$ corresponds to analyzer settings oriented along $\frac{\pi}{8}$ and $\frac{5\pi}{8}$, wherein $A_1$ corresponds to analyzer settings oriented along $0$ and $\frac{\pi}{2}$, wherein $A_2$ corresponds to analyzer settings oriented along $\frac{\pi}{4}$ and $\frac{3\pi}{4}$. Accordingly, the detector setting $B_1$ corresponds to analyzer settings oriented along $\frac{\pi}{8}$ and $\frac{5\pi}{8}$, wherein $B_2$ corresponds to analyzer settings oriented along $-\frac{\pi}{8}$ and $\frac{3\pi}{8}$.

Each time a photon is detected with a randomly chosen detection setting a corresponding measurement value is generated.

For the detection setting $A_0$ the corresponding measurement value is referred to as $a_0$. For the detection setting $A_1$ the corresponding measurement value is referred to as $a_1$ and for the detection setting $A_2$ the corresponding measurement value is referred to as $a_2$. Similarly, at the second receiver for the detection setting $B_1$ the corresponding measurement value is referred to as $b_1$ and for the detection setting $B_2$ the corresponding measurement value is referred to as $b_2$.

The measurement values are representative for a measured polarization with respect to the chosen detector setting / analyzer 16-1, 16-2 orientation, i.e. with respect to the chosen measurement basis and can be expressed as a binary value indicative for two orthogonal polarization directions.

Each measurement value is stored associated to the corresponding detection setting at the respective receiver A, B.

In Fig. 1 the steps 100 to 400 are repeated 1000 until sufficiently large number of valid measurements are acquired at the first and the second receiver.

After repeating the steps 100 to 400, at the first receiver A there is a plurality of measurement values $a_0$, $a_1$, and $a_2$ obtained and at the second receiver B there is a plurality of measurement values $b_1$ and $b_2$ obtained.

In step 500 of Fig. 1 some of the measurement values $b_1$ are modified. Whether or not a measurement value $b_1$ is modified is determined by a noise-probability p, i.e. with a noise-probability p each measurement value $b_1$ is flipped to the opposite binary value, e.g. from 1 to -1 or vice versa.

Thus, a plurality of measurement values $b_1$ might be composed as follows:
-1, 1, 1, 1, -1, 1, 1.

After the modification step said plurality might be modified as follows:
-1, -1, 1, 1,-1, 1, 1, i.e. the second measurement value is flipped from 1 to -1.

This modified plurality of measurement values is stored at the second receiver as well as the non-modified plurality of measurement values $b_1$.

The noise-probability p is particularly well-known to the first and the second receiver A, B. Particularly, the noise-probability p has its origin not in random environmental noise present in measurements, storage devices, or other components that accidentally flip measurement values but is introduced to the plurality of measurement values in a controlled fashion.

In contrast, in Fig. 2 the modification step 500 is executed each time a measurement with detection setting $B_1$ is performed at the second receiver at a detection step 400.

Then, the steps 100 to 400 as well as the modification step 500 are repeated 1000 until a sufficiently large number of valid measurements are acquired at the first and the second receiver A, B.

Apart from this difference the exemplary embodiments in Fig. 1 and Fig. 2 are identical.

In step 600 error correction is performed by executing an error correction method.

The purpose of error correction is to reconcile strings, that are formed by the measurement values $a_0$, $a_1$, $a_2$ as well as $b_1$, $b_2$ and/or $b^*_1$ held by the first and the second receiver A, B with as little communication between the first and the second receiver as possible. For example, the first receiver A holds a string $a_0$= 00101201 (the string does not need to be a string of bits), and the second receiver B holds the string $b_1$ = 00101101. These two strings are almost identical, but not perfectly (the 5th position/bit is different in this example). Now, one thing the second receiver B can do is compute the Boolean XOR of a few randomly selected subsets of his string. For instance, if the second receiver selects bits/position [1,2,4,5] for the first subset, i.e. 0001 and [5,6] for the second subset, i.e. 00, the second receiver gets the result (1) for the first subset and (0) for the second subset when applying the XOR operation to the subsets. The second receiver then transmits, via public transmission channel, just these two bits representing the results of the first and the second subset when applying the XOR operation to the first receiver A. With the understanding that these bits are to be interpreted as the result of an XOR operation of the corresponding subsets that are formed by the first receiver, the first receiver can check if the results on his string and the corresponding subsets are identical. In this example, the first receiver would obtain (1) for the first subset of string $a_0$ and (?) for the second subset of string $a_0$, wherein the question mark "(?)" indicates that the first receiver doesn't know what the result is supposed to be. By verifying that the results (1) for the first subsets match, the first receiver gains a high confidence that the bits/positons 1,2,4,5 are correct. The first receiver can then further deduce that the fifth bit should be a 1, so that the results for the second subsets (0) match as well. The first receiver therefore corrects his string to $ao$=00101101 which matches the string at the second receiver. Obviously, the person skilled in the art is capable to perform error correction as known in the art. The person skilled in the art knows how to choose the subsets for error correction. For example "https://en.wikipedia.org/wiki/Low-density_parity-check_code" discloses techniques that are available for this task.

After error correction 600, a raw key is obtained/determined from the measurement values $a_0$ and the modified measurement values $b^*_1$ by the first and the second receiver. The raw key is typically determined by way of comparison of the corresponding measurement values measured at the first and the second receiver, which is a known task for person skilled in the art.

After error correction, step 700 is executed to determine a probability of a third receiver E, Eve, interfering with the transmission to the entangled particles to the first and the second receiver A, B via the quantum channel 11.

For this purpose a correlation value S is determined, wherein said correlation parameter in this example is the so-called CHSH coefficient value (F. Clauser; M.A. Horne; A. Shimony; R.A. Holt (1969), "Proposed experiment to test local hidden-variable theories", Phys. Rev. Lett., 23 (15): 880-4), that is given by

$$S = \langle a_1 b_1 \rangle + \langle a_1 b_2 \rangle + \langle a_2 b_1 \rangle - \langle a_2 b_2 \rangle,$$

Wherein $\langle ... \rangle$ denotes the calculation of an expectation value of the quantum correlation between measurement values a and b. With perfectly entangled quantum moieties and detection S will be larger than 2, wherein in case entanglement is broken, e.g. by a third party measuring some or all of the transmitted moieties S will by lower than 2 indicating an interference with the quantum key generation.

In case the correlation value S is below 2 the method might be aborted as the generation of the quantum key might be secure.

A common privacy amplification step 800 is also performed according to some embodiments of the invention. The privacy amplification step 800 allows for reducing an amount of information regarding a string, such as the raw key generated by the first or the second receiver A, B potentially available to a third receiver E below a predefined threshold value.

In the following it is shortly, illustratively and exemplary explained how privacy amplification on the raw key (i.e. a string) of the second receiver B can be performed.

Privacy amplification is accomplished by shortening the raw key. As a simplified example, let's assume that the second receiver holds the raw (bit) key $k_2$ = 00101101..., after error correction. It is further assumed that a third receivers amount on each bit of the raw key is smaller than 1, i.e. for the third receiver the probability of having the correct bit value of each bit is

$$\tfrac{1}{2} < p < 1$$

per bit. Lastly, it is assumed that the third receiver E has no further information on the raw key. For privacy amplification the second receiver B generates a modified key by applying the BOLLEAN XOR function to successive pairs of bits in the raw key In this case, the modified key would read $k_2'$ = 0101.... The modified key is twice shorter, and the information of the third receiver on the modified key is reduced. From the third receiver's point of view, the probability that the first bit is 0 is $p^2 + (1 - p)^2 < p$. The third receiver therefore has less information about the modified key than about the raw key.

In general, information of the third receiver E about the raw can be more general, and more advanced techniques are might be required for privacy amplification. One possibility, which gives rise to universal strong extractor robust to quantum side information, is the multiplication of the raw key with a random Toeplitz matrix M, i.e. defining b' = M*b. See e.g. Ma, Xiongfeng et al. "Postprocessing for Quantum Random-Number Generators: Entropy Evaluation and Randomness Extraction." Physical Review A 87.6 (2013).

Once the first and the second receiver A, B have performed privacy amplification the final shared quantum key is obtained 900 after the privacy amplification from the modified key, several quantum key distribution related applications 901 and methods might be based on the final shared quantum key.

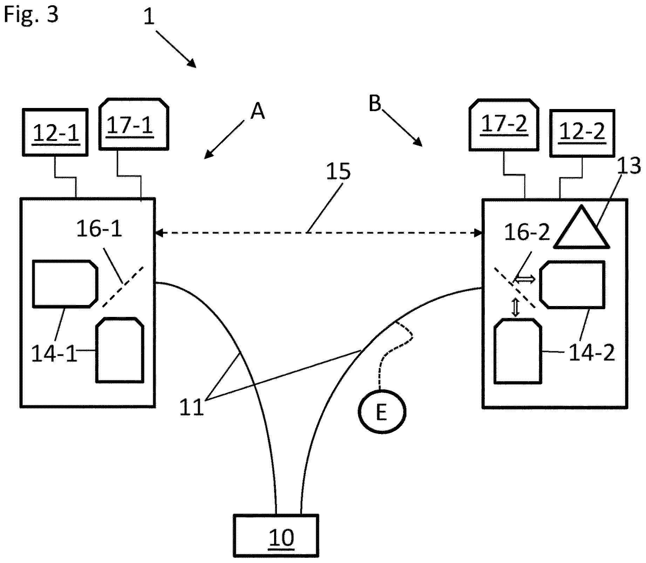

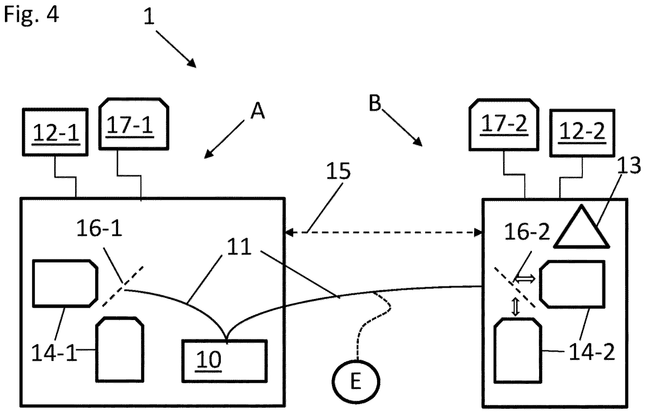

Fig. 3 and 4 schematically show two different embodiments of the system 1 according to the invention.

A first and a second receiver A, B are connected via a so-called quantum channel 11, that is used to transmit the entangled moieties to the first and the second receiver A, B. In this example the entangled moieties are polarization-entangled photon pairs.

The entangled photons are generated by an entanglement source 10 configured to generate and distribute single entangled photon pairs, wherein the source 10 is configured to transmit a first entangled photon of the entangled photon pair to the first receiver A and a second entangled photon of the entangled photon pair to the second receiver B, particularly wherein the entanglement source 10 is a photon source configured to generated entangled photons by a stochastic parametric down-conversion process.

In Fig. 3 the entanglement source 10 is located neither at the location of the first receiver A nor at the location of the second receiver B but at a separate location.

In Fig. 4 the entanglement source 10 is comprised by the first receiver A. Therefore, the first photon pair does not have to propagate far with respect to the first receiver A, but only the second photon has to propagate a comparably long distance.

Both embodiments of the system 1 have distinct advantages.

Regardless of the location of the entanglement source 10, the first receiver A and the second receiver B have a photon detector 16-1, 16-2 for detecting the incident photons from the quantum channel 11.

The detector 16-1, 16-2 can be adjusted by means of an adjustable analyzer 14-2 for at least two detection settings $B_1$, $B_2$ at the second receiver B and by means of an adjustable analyzer 14-1 for three detection settings $A_0$, $A_1$ or $A_2$ at the first receiver A. Each detection setting allows measuring the polarization of any incident photon with respect to a predefined basis, e.g. an orthogonal basis. The detection settings are different with respect to their basis, i.e. they use a different basis. Typically, the bases are rotated to by a predefined amount with respect to each other.

The first and the second receiver A, B are further equipped with a module 17-1, 17-2 that is configured to randomly select one detection setting, such that incident photons are measured by a randomly selected detection setting. The module 17-1, 17-2 can be a computer or be comprised in a computer.

The detectors 16-1, 16-2 of the first and the second receiver A, B particularly provide the measurement values in form of a binary number. For this purpose, the detector 16-1, 16-2 might comprise an additional signal transformation module (not shown). Alternatively, the detector signals might be transformed by a computer (e.g. 17-1, 17-2) comprised by the first and the second receiver A, B.

In addition to the known systems for quantum key distribution, the second receiver B has a random number generator 13. The random number generator is configured and adapted as a noise generator, configured to introduce noise to measurement values $b_1$ associated to the detection setting $B_1$ of the second receiver B.

The noise can be adjusted in strength, i.e. the noise has an associated noise-probability that determines the probability of each measurement value b1 to be flipped to its complementary value.

For this purpose, the second receiver B is configured to perform a modification step 500 on the measurement values $b_1$. This modification step 500 can be executed right after a detection event with detection setting $B_1$ or after transmission of a plurality of measurement values $b_1$ with detection setting $B_1$.

In any case, the original measurement values $b_1$ (particularly the original sequence of measurement values) are stored at the second receiver and also the modified sequence $\widetilde{b_1}$ of measurement values with detection setting $B_1$.

The modified and the original sequence of measurement values can be very similar depending on the noise probability. For a low noise-probability, the sequences will deviate only in a few instances.

The system 1 is further configured to execute method steps for error correction 600, via a public transmission channel1 5, correlation value S estimation 700 and privacy amplification 800 for generating the final shared quantum key.

Generation of the final quantum key might for example be achieved by using the E91 protocol as described in Ekert, Artur K. (5 August 1991). "Quantum cryptography based on Bell's theorem". Physical Review Letters. 67 (6): 661-663.

It is noted that the addition of noise surprisingly allows for a lower detection efficiency of the photons at the detectors such that device-independent quantum key generation can be facilitated in a more robust fashion, while maintaining the same amount of security against third receivers interfering with the quantum key distribution.

**Claims**

1. A method for device-independent quantum key generation and distribution between a first and a second receiver, the method comprising the steps of:

    a) Generating (100) an entangled information pair, comprising two entangled quantum moieties that have at least one degree of freedom entangled with each other, such as a polarization,
    b) Transmitting (200) a first entangled quantum moiety of the two entangled quantum moieties to the first receiver (A) and a second entangled quantum moiety of the two entangled quantum moieties to the second receiver (B),
    c) At the first receiver (A) receiving and measuring (300) the entangled quantum state of the first entangled quantum moiety with a selected detection setting A* that is chosen from at least three detection settings $A_0$, $A_1$, or $A_2$, wherein a measurement value $a_0$, $a_1$, $a_2$ representative of the outcome of the measurement is stored associated to the selected detection setting A*,
    d) At the second receiver (B) receiving and measuring (400) the entangled quantum state of the second quantum moiety with a selected detection setting B* that is chosen from at least two detection settings $B_1$ or $B_2$, wherein a measurement value $b_1$, $b_2$ representative of the outcome of the measurement is stored associated to the selected detection setting B*, executing steps e) and f) in arbitrary order,
    e) Repeating (1000) the steps a) to d) and/or f) such that a plurality of measurement values $a_0$, $a_1$, $a_2$ measured with the associated detection settings $A_0$, $A_1$ and $A_2$ for the measurements at the first receiver (A) is obtained at the first receiver (A) and such that a plurality of the measurement values $b_1$ and $b_2$ measured with the associated detection settings $B_1$ and $B_2$ for the measurements at the second receiver (B) is obtained at the second receiver (B),
    f) In a modification step (500), assigning each measurement value $b_1$ measured with detection setting $B_1$ a complementary value $b_1^*$ according to a noise-probability $p$, wherein the noise-probability $p$ is larger than 0 and lower than 1, such that a modified plurality of measurement values $\widetilde{b_1}$ is obtained after executing step e),
    g) Generating (900) a final shared quantum key from the modified plurality measurements values $\widetilde{b_1}$ and from the plurality of measurement values $a_0$ measured at the first receiver (A).

2. The method according to claim 1, wherein the measurement values $a_1$ and measurement values $a_2$, as well as the measurement values $b_1$ and measurement values $b_2$ are binary values.

3. The method according any of the preceding claims, wherein the generation of the final shared key comprises executing (600) an error correction method at least on the modified plurality of measurement values $\widetilde{b_1}$ and $a_0$ configured to correct errors in the transmission of the entangled moieties to the first and the second receiver (A, B), particularly wherein a raw key at the first and the second receiver (A, B) is obtained after the error correction method is successfully executed.

4. The method according to any of the preceding claims, wherein the following steps (700) are executed to determine a probability of a third receiver (E) interfering with the transmission to the entangled quantum moieties to the first and the second receiver (B) via a quantum channel (11):

- Determining for the plurality of measurement values $a_1$, $a_2$, and $b_1$, $b_2$ a correlation value $S$, wherein said correlation value $S$ is sensitive to local causality and is further configured to rule out local causality, particularly wherein S configured to be used for a Bell test, particularly wherein the correlation value is a CHSH coefficient value,
- Particularly adjusting the correlation value $S$ for a contribution of intrinsic noise in the measurement values $b_1$,
- Evaluating the correlation value $S$, wherein if said correlation value $S$ is below a predefined threshold value, an alarm is issued and no quantum key is generated.

5. The method according to any of the preceding claims, wherein the generation of the final shared key comprises executing (800) a privacy amplification method, at least on the modified plurality of measurement values $\widetilde{b_1}$ and the measurement values $a_0$, particularly on the raw key, configured to minimize an amount of information possibly available to a third receiver (E) about the final shared quantum key, particularly wherein the privacy amplification method is configured to reduce the amount of information possibly available to a third receiver about the final shared quantum key below predefined threshold value.

6. The method according to claim 5, wherein if the third receiver (E) interferes with the generation of the final shared quantum key, the method is aborted and/or repeated.

7. The method according to any of the preceding claims, wherein the detection settings $A_0$, $A_1$, $A_2$ as well as $B_1$ and $B_2$ comprise at least two non-identical bases for detecting the quantum state of incident quantum moieties, particularly wherein detection setting $A_0$ and $A_1$ form two non-identical bases for detecting the quantum moieties at the first receiver (A).

8. The method according to any of the preceding claims, wherein the noise-probability $p$ is smaller than 0.3, particularly smaller than 0.2, more particularly smaller than 0.1.

9. The method according to any of the preceding claims, wherein the noise-probability $p$ is larger than 0.7, particularly larger than 0.8, more particularly larger than 0.9.

10. The method according to any of the preceding claims, wherein the transmitted entangled quantum moieties are detected at the first and/or second receiver (A, B) with a probability lower than 0.95, particularly lower than 0.9, more particularly lower than 0.85.

11. A system (1) for executing the method according to one of the preceding claims, wherein the system comprises a second receiver (B), wherein the second receiver (B) is configured to

- detect incident entangled quantum moieties with at least two different detection setting $B_1$ and $B_2$ with a detector (14-2) of the second receiver (B),
- generate for each measurement a value $b_1$, $b_2$ representative for the measurement outcomes preformed with one of the randomly chosen detection setting $B_1$ or $B_2$, store the measurement values $b_1$, $b_2$ associated to the randomly chosen detection setting $B_1$ and $B_2$ on a data storage (12-2) of the second receiver (B),

wherein the second receiver (B) comprises a noise generator (13), wherein said noise generator (13) is configured to introduce noise to measurement values $b_1$ associated to the detection setting $B_1$.

12. The system (1) according to claim 11, wherein the noise generator (13) is configured to receive from the data storage (12-2) or a detector (14-2) from the second receiver (B) the measurement values $b_1$ associated to the detection setting $B_1$ and from the received measurement values $b_1$ to invert randomly selected measurement values $b_1^*$ of the plurality of measurement values $b_1$ with a noise-probability $p$ and to store the complementary measurement values $\widetilde{b_1^*}$ and the non-inverted measurement values $b_1$ as a modified plurality of measurement values $\widetilde{b_1}$ in the data storage (12-2).

13. The system according to any of the claims 11 or 12, wherein the system (1) comprises

- a first receiver (A), wherein the first receiver (A) is connected to the second receiver (B) with a public transmission channel (15) for exchanging information particularly via radio waves, wherein the first receiver (A) is configured to

a) detect incident entangled quantum moieties with at least three different detection setting $A_0$, $A_1$, and $A_2$ with a detector (14-1) of the first receiver (A),
b) generate measurement values representative for the measurement outcomes preformed with one of the randomly chosen detection setting $A_0$, $A_1$, $A_2$,
c) store the measurement values associated to the randomly chosen detection setting $A_0$, $A_1$, $A_2$ on a data storage (12-1) of the first receiver (A),

- an entanglement source (10) configured to generate and distribute entangled moiety pairs, particularly single entangled moiety pairs, wherein the entanglement source (10) is configured to transmit a first entangled moiety of the entangled moiety pair to the first receiver and a second entangled moiety of the entangled moiety pair to the second receiver via a quantum channel (11), particularly wherein the source is a photon source configured to generated entangled photons,
- particularly wherein a detection probability for distributed entangled quantum moieties is lower than 0.95, particularly lower than 0.9, more particularly lower than 0.85 at the first and/or the second receiver (A, B).

**Patentansprüche**

1. Ein Verfahren zur geräteunabhängigen Quantenschlüsselerzeugung und Verteilung zwischen einem ersten und einem zweiten Empfänger, wobei das Verfahren die folgenden Schritte umfasst:

a) Erzeugen (100) eines verschränkten Informationspaares, umfassend zwei verschränkte Quanteneinheiten, die mindestens einen miteinander verschränkten Freiheitsgrad haben, wie z. B. eine Polarisation,
b) Übertragen (200) einer ersten verschränkten Quanteneinheit der zwei verschränkten Quanteneinheiten an den ersten Empfänger (A) und einer zweiten verschränkten Quanteneinheit der zwei verschränkten Quanteneinheiten an den zweiten Empfänger (B),
c) Empfangen und Messen (300) des verschränkten Quantenzustands der ersten verschränkten Quanteneinheit am ersten Empfänger (A) mit einer ausgewählten Erfassungseinstellung A*, die aus mindestens drei Erfassungseinstellungen $A_0$, $A_1$ oder $A_2$ ausgewählt wird, wobei ein für das Ergebnis der Messung repräsentativer Messwert $a_0$, $a_1$, $a_2$ in Verbindung mit der ausgewählten Erfassungseinstellung A* gespeichert wird,
d) Empfangen und Messen (400) des verschränkten Quantenzustands der zweiten Quanteneinheit am zweiten Empfänger (B) mit einer ausgewählten Erfassungseinstellung B*, die aus mindestens zwei Erfassungseinstellungen $B_1$ oder $B_2$ ausgewählt wird, wobei ein für das Ergebnis der Messung repräsentativer Messwert $b_1$, $b_2$, verbunden mit der ausgewählten Erfassungseinstellung B*, gespeichert wird, wobei die Schritte e) und f) in beliebiger Reihenfolge ausgeführt werden,
e) Wiederholung (1000) der Schritte a) bis d) und/oder f), sodass eine Vielzahl von Messwerten $a_0$, $a_1$, $a_2$, die mit den damit verbundenen Erfassungseinstellungen $A_0$, $A_1$ und $A_2$ für die Messungen am ersten Empfänger (A) gemessen wurden, am ersten Empfänger (A) erhalten wird und, sodass eine Vielzahl von Messwerten $b_1$ und $b_2$, die mit den damit verbundenen Erfassungseinstellungen $B_1$ und $B_2$ für die Messungen am zweiten Empfänger (B) gemessen wurden, am zweiten Empfänger (B) erhalten wird,
f) In einem Modifikationsschritt (500) wird jedem mit der Erfassungseinstellung $B_1$ gemessenen Messwert $b_1$ ein Komplementärwert $b_1$* gemäß einer Rauschwahrscheinlichkeit p zugewiesen, wobei die Rauschwahrscheinlichkeit p größer als 0 und kleiner als 1 ist, sodass eine modifizierte Vielzahl von Messwerten $\widetilde{b_1}$ erhalten wird, nachdem der Schritt e) ausgeführt wurde,
g) Erzeugen (900) eines endgültigen gemeinsamen Quantenschlüssels aus der modifizierten Vielzahl von Messwerten $\widetilde{b_1}$ und aus der Vielzahl der am ersten Empfänger (A) gemessenen Messwerte $a_0$.

2. Das Verfahren nach Anspruch 1, wobei die Messwerte $a_1$ und Messwerte $a_2$ sowie die Messwerte $b_1$ und Messwerte $b_2$ binäre Werte sind.

3. Das Verfahren nach einem der vorhergehenden Ansprüche, wobei die Erzeugung des endgültigen gemeinsamen Schlüssel das Ausführen (600) eines Fehlerkorrekturverfahrens zumindest an der modifizierten Vielzahl von Messwerten $\widetilde{b_1}$ und $a_0$ umfasst, das konfiguriert ist, um Fehler bei der Übertragung der verschränkten Einheiten zu dem ersten und dem zweiten Empfänger (A, B) zu korrigieren, insbesondere wobei ein Rohschlüssel an dem ersten und dem zweiten Empfänger (A, B) erhalten wird, nachdem das Fehlerkorrekturverfahren erfolgreich ausgeführt wurde.

4. Das Verfahren nach einem der vorhergehenden Ansprüche, wobei die folgenden Schritte (700) ausgeführt werden, um eine Wahrscheinlichkeit zu bestimmen, dass ein dritter Empfänger (E) die Übertragung der verschränkten Einheiten an den ersten und den zweiten Empfänger (B) über einen Quantenkanal (11) stört:

   - Ermitteln eines Korrelationswertes S für die Vielzahl von Messwerten $a_1$, $a_2$ und $b_1$, $b_2$, wobei der genannte Korrelationswert S empfindlich für lokale Kausalität ist und ferner so konfiguriert ist, dass er lokale Kausalität ausschließt, insbesondere wobei S so konfiguriert ist, dass es für einen Bell-Test verwendet werden kann, insbesondere wobei der Korrelationswert ein CHSH-Koeffizientenwert ist,
   - Insbesondere die Anpassung des Korrelationswertes S für einen Beitrag des Eigenrauschens in den Messwerten $b_1$,
   - Auswerten des Korrelationswertes S, wobei, wenn der genannte Korrelationswert S unter einem vordefinierten Schwellenwert liegt, ein Alarm ausgegeben wird und kein Quantenschlüssel erzeugt wird.

5. Das Verfahren nach einem der vorhergehenden Ansprüche, wobei die Erzeugung des endgültigen gemeinsamen Schlüssels das Ausführen (800) eines Verfahrens zur Verstärkung des Datenschutzes zumindest auf der modifizierten Vielzahl von Messwerten $\widetilde{b_1}$ und den Messwerten $a_0$, insbesondere auf dem Rohschlüssel, umfasst, das so konfiguriert ist, dass es eine Menge an Informationen, die einem dritten Empfänger (E) über den endgültigen gemeinsamen Quantenschlüssel möglicherweise zur Verfügung stehen, minimiert, insbesondere wobei das Verfahren zur Verstärkung des Datenschutzes so konfiguriert ist, dass es die Menge an Informationen, die einem dritten Empfänger über den endgültigen gemeinsamen Quantenschlüssel möglicherweise zur Verfügung stehen, unter einen vordefinierten Schwellenwert reduziert.

6. Das Verfahren nach Anspruch 5, wobei das Verfahren abgebrochen und/oder wiederholt wird, wenn der dritte Empfänger (E) die Erzeugung des endgültigen gemeinsamen Quantenschlüssels stört.

7. Das Verfahren nach einem der vorhergehenden Ansprüche, wobei die Erfassungseinstellungen $A_0$, $A_1$, $A_2$ sowie $B_1$ und $B_2$ mindestens zwei nicht-identische Basen zur Erfassung des Quantenzustandes einfallender Quanteneinheiten umfassen, insbesondere wobei die Erfassungseinstellung $A_0$ und $A_1$ zwei nicht-identische Basen zur Erfassung der Quanteneinheiten am ersten Empfänger (A) bilden.

8. Das Verfahren nach einem der vorhergehenden Ansprüche, wobei die Rauschwahrscheinlichkeit p kleiner als 0,3, insbesondere kleiner als 0,2, ganz besonders kleiner als 0,1 ist.

9. Das Verfahren nach einem der vorhergehenden Ansprüche, wobei die Rauschwahrscheinlichkeit p größer als 0,7, insbesondere größer als 0,8, ganz besonders größer als 0,9 ist.

10. Das Verfahren nach einem der vorhergehenden Ansprüche, wobei die übertragenen verschränkten Quanteneinheiten am ersten und/oder zweiten Empfänger (A, B) mit einer Wahrscheinlichkeit von weniger als 0,95, insbesondere weniger als 0,9, ganz besonders weniger als 0,85, erfasst werden.

11. Ein System (1) zum Ausführen des Verfahrens nach einem der vorhergehenden Ansprüche, wobei das System einen zweiten Empfänger (B) umfasst, wobei der zweite Empfänger (B) so konfiguriert ist, dass er

   - mit einem Detektor (14-2) des zweiten Empfängers (B) einfallende verschränkte Quanteneinheiten mit mindestens zwei unterschiedlichen Erfassungseinstellungen $B_1$ und $B_2$ erfasst,
   - für jede Messung einen Wert $b_1$, $b_2$ erzeugt, der für die Ergebnisse der Messung repräsentativ ist, die mit einer der zufällig ausgewählten Erfassungseinstellungen $B_1$ oder $B_2$ durchgeführt wurde, und die Messwerte $b_1$, $b_2$, verbunden mit den zufällig gewählten Erfassungseinstellungen $B_1$ und $B_2$, auf einem Datenspeicher (12-2) des zweiten Empfängers (B) speichert,

   wobei der zweite Empfänger (B) einen Rauschgenerator (13) umfasst, wobei der genannte Rauschgenerator (13) so konfiguriert ist, dass er Rauschen in die Messwerte $b_1$ einführt, die mit der Erfassungseinstellung $B_1$ verbunden sind.

12. Das System (1) nach Anspruch 11, wobei der Rauschgenerator (13) so konfiguriert ist, dass er vom Datenspeicher (12-2) oder einem Detektor (14-2) des zweiten Empfängers (B) die mit der Erfassungseinstellung $B_1$ verbundenen Messwerte $b_1$

empfängt und aus den empfangenen Messwerten $b_1$ zufällig ausgewählte Messwerte $b_1^*$ aus der Vielzahl der Messwerte $b_1$ mit einer Rauschwahrscheinlichkeit p invertiert und die komplementären Messwerte $\widetilde{b_1^*}$ und die nicht invertierten Messwerte $b_1$ als eine modifizierte Vielzahl von Messwerten $\widetilde{b_1}$ im Datenspeicher (12-2) speichert.

13. Das System nach einem der Ansprüche 11 oder 12, wobei das System (1) Folgendes umfasst

- einen ersten Empfänger (A), wobei der erste Empfänger (A) mit dem zweiten Empfänger (B) über einen öffentlichen Übertragungskanal (15) zum Austausch von Informationen, insbesondere über Funkwellen, verbunden ist, wobei der erste Empfänger (A) so konfiguriert ist, dass er

a) einfallende verschränkte Quanteneinheiten mit mindestens drei verschiedenen Erfassungseinstellungen $A_0$, $A_1$ und $A_2$ mit einem Detektor (14-1) des ersten Empfängers (A) erfasst,
b) Messwerte, die für die Ergebnisse der Messung repräsentativ sind, die mit einer der zufällig gewählten Erfassungseinstellungen $A_0$, $A_1$, $A_2$ durchgeführt wurde, erzeugt,
c) Messwerte, die mit der zufällig gewählten Erfassungseinstellung $A_0$, $A_1$, $A_2$ verbunden sind, in einem Datenspeicher (12-1) des ersten Empfängers (A), speichert,

- eine Verschränkungsquelle (10), die so konfiguriert ist, dass sie verschränkte Einheitenpaare, insbesondere einzelne verschränkte Einheitenpaare, erzeugt und verteilt, wobei die Verschränkungsquelle (10) so konfiguriert ist, dass sie eine erste verschränkte Einheit des verschränkten Einheitenpaares an den ersten Empfänger und eine zweite verschränkte Einheit des verschränkten Einheitenpaares an den zweiten Empfänger über einen Quantenkanal (11) überträgt, insbesondere wobei die Quelle eine Photonenquelle ist, die so konfiguriert ist, dass sie verschränkte Photonen erzeugt,
- insbesondere wobei die Erfassungswahrscheinlichkeit für verteilte verschränkte Quanteneinheiten kleiner als 0,95, insbesondere kleiner als 0,9, ganz besonders kleiner als 0,85 am ersten und/oder zweiten Empfänger (A, B) ist.

## Revendications

1. Procédé de génération et distribution de clés quantiques indépendantes du dispositif entre un premier et un deuxième récepteur, le procédé comprenant les étapes consistant à :

a) générer (100) une paire d'informations intriquées, comprenant deux fragments quantiques intriqués qui ont au moins un degré de liberté intriqués l'un avec l'autre, tel qu'une polarisation,
b) transmettre (200) un premier fragment quantique intriqué des deux fragments quantiques intriqués au premier récepteur (A) et un second fragment quantique intriqué des deux fragments quantiques intriqués au deuxième récepteur (B),
c) au niveau du premier récepteur (A), recevoir et mesurer (300) l'état quantique intriqué du premier fragment quantique intriqué avec un réglage de détection sélectionné A* qui est choisi parmi au moins trois réglages de détection $A_0$, $A_1$ ou $A_2$, dans lequel une valeur de mesure $a_0$, $a_1$, $a_2$ représentative du résultat de la mesure est stockée de manière associée au réglage de détection sélectionné A*,
d) au niveau du deuxième récepteur (B), recevoir et mesurer (400) l'état quantique intriqué du second fragment quantique avec un réglage de détection sélectionné B* qui est choisi parmi au moins deux réglages de détection $B_1$ ou $B_2$, dans lequel une valeur de mesure $b_1$, $b_2$ représentative du résultat de la mesure est stockée de manière associée au réglage de détection sélectionné B*, exécuter les étapes e) et f) dans un ordre arbitraire,
e) répéter (1000) les étapes a) à d) et/ou f) de sorte qu'une pluralité de valeurs de mesure $a_0$, $a_1$, $a_2$ mesurées avec les réglages de détection associés $A_0$, $A_1$ et $A_2$ pour les mesures au niveau du premier récepteur (A) est obtenue au niveau du premier récepteur (A) et de sorte qu'une pluralité des valeurs de mesure $b_1$ et $b_2$ mesurées avec les réglages de détection associés $B_1$ et $B_2$ pour les mesures au niveau du deuxième récepteur (B) est obtenue au niveau du deuxième récepteur (B),
f) dans une étape de modification (500), attribuer à chaque valeur de mesure $b_1$ mesurée avec le réglage de détection $B_1$ une valeur complémentaire $b_1^*$ en fonction d'une probabilité de bruit p, dans lequel la probabilité de bruit p est supérieure à 0 et inférieure à 1 de sorte qu'une pluralité modifiée de valeurs de mesure $\widetilde{b_1}$ est obtenue après l'exécution de l'étape e),
g) générer (900) une clé quantique partagée finale à partir de la pluralité modifiée de valeurs de mesure $\widetilde{b_1}$ et à partir de la pluralité de valeurs de mesure $a_0$ mesurées au niveau du premier récepteur (A).

2. Procédé selon la revendication 1, dans lequel les valeurs de mesure $a_1$ et valeurs de mesure $a_2$ ainsi que les valeurs de mesure $b_1$ et valeurs de mesure $b_2$ sont des valeurs binaires.

3. Procédé selon l'une quelconque des revendications précédentes, dans lequel la génération de la clé partagée finale comprend l'exécution (600) d'un procédé de correction d'erreur au moins sur la pluralité modifiée de valeurs de mesure $\widetilde{b_1}$ et $a_0$ configuré pour corriger des erreurs dans la transmission des fragments intriqués au premier et au deuxième récepteur (A, B), notamment dans lequel une clé brute au niveau du premier et du deuxième récepteur (A, B) est obtenue après que le procédé de correction d'erreur est exécuté avec succès.

4. Procédé selon l'une quelconque des revendications précédentes, dans lequel les étapes suivantes (700) sont exécutées pour déterminer une probabilité d'un troisième récepteur (E) interférant avec la transmission aux fragments intriqués au premier et au deuxième récepteur (B) par le biais d'un canal quantique (11) :

   - déterminer pour la pluralité de valeurs de mesure $a_1$, $a_2$ et $b_1$, $b_2$ une valeur de corrélation S, dans lequel ladite valeur de corrélation S est sensible à une causalité locale et est en outre configurée pour exclure une causalité locale, notamment dans lequel $S$ est configurée pour être utilisée pour un test de Bell, notamment dans lequel la valeur de corrélation est une valeur de coefficient CHSH,
   - ajuster particulièrement la valeur de corrélation $S$ pour une contribution de bruit intrinsèque dans les valeurs de mesure $b_1$,
   - évaluer la valeur de corrélation $S$, dans lequel si ladite valeur de corrélation $S$ est en dessous d'une valeur seuil prédéfinie, une alarme est émise et aucune clé quantique n'est générée.

5. Procédé selon l'une quelconque des revendications précédentes, dans lequel la génération de la clé partagée finale comprend l'exécution (800) d'un procédé d'amplification de confidentialité, au moins sur la pluralité modifiée de valeurs de mesure $\widetilde{b_1}$ et les valeurs de mesure $a_0$, notamment sur la clé brute, configuré pour minimiser une quantité d'informations éventuellement disponibles à un troisième récepteur (E) concernant la clé quantique partagée finale, notamment dans lequel le procédé d'amplification de confidentialité est configuré pour réduire la quantité d'informations éventuellement disponibles à un troisième récepteur concernant la clé quantique partagée finale en dessous d'une valeur seuil prédéfinie.

6. Procédé selon la revendication 5, dans lequel si le troisième récepteur (E) interfère avec la génération de la clé quantique partagée finale, le procédé est interrompu et/ou répété.

7. Procédé selon l'une quelconque des revendications précédentes, dans lequel les réglages de détection $A_0$, $A_1$, $A_2$ ainsi que $B_1$ et $B_2$ comprennent au moins deux bases non identiques pour détecter l'état quantique de fragments quantiques incidents, notamment dans lequel les réglages de détection et $A_1$ forment deux bases non identiques pour détecter les fragments quantiques au niveau du premier récepteur (A).

8. Procédé selon l'une quelconque des revendications précédentes, dans lequel la probabilité de bruit $p$ est inférieure à 0,3, en particulier inférieure à 0,2, plus particulièrement inférieure à 0,1.

9. Procédé selon l'une quelconque des revendications précédentes, dans lequel la probabilité de bruit $p$ est supérieure à 0,7, en particulier supérieure à 0,8, plus particulièrement supérieure à 0,9.

10. Procédé selon l'une quelconque des revendications précédentes, dans lequel les fragments quantiques intriqués transmis sont détectés au niveau du premier et/ou deuxième récepteur (A, B) avec une probabilité inférieure à 0,95, en particulier inférieure à 0,9, plus particulièrement inférieure à 0,85.

11. Système (1) pour l'exécution du procédé selon une des revendications précédentes, dans lequel le système comprend un deuxième récepteur (B), dans lequel le deuxième récepteur (B) est configuré pour

   - détecter des fragments quantiques intriqués incidents avec au moins deux réglages de détection différents $B_1$ et $B_2$ avec un détecteur (14-2) du deuxième récepteur (B),
   - générer pour chaque mesure une valeur $b_1$, $b_2$ représentative des résultats de mesure réalisés avec un du réglage de détection choisi aléatoirement $B_1$ ou $B_2$, stocker les valeurs de mesure $b_1$, $b_2$ associées au réglage de détection choisi aléatoirement $B_1$ et $B_2$ sur un stockage de données (12-2) du deuxième récepteur (B),

   dans lequel le deuxième récepteur (B) comprend un générateur de bruit (13), dans lequel ledit générateur de bruit (13) est configuré pour introduire du bruit dans les valeurs de mesure b$_1$ associés au réglage de détection B$_1$.

12. Système (1) selon la revendication 11, dans lequel le générateur de bruit (13) est configuré pour recevoir du stockage de données (12-2) ou un détecteur (14-2) du deuxième récepteur (B) les valeurs de mesure b$_1$ associés au réglage de détection B$_1$ et à partir des valeurs de mesure reçues b$_1$ pour inverser aléatoirement des valeurs de mesure sélectionnées b$_1^*$ de la pluralité de valeurs de mesure b$_1$ avec une probabilité de bruit $p$ et pour stocker les valeurs de mesure complémentaires $\widetilde{b_1^*}$ et les valeurs de mesure non inversées b$_1$ en tant que pluralité modifiée des valeurs de mesure $\widetilde{b_1}$ dans le stockage de données (12-2).

13. Système selon l'une quelconque des revendications 11 ou 12, dans lequel le système (1) comprend

- un premier récepteur (A), dans lequel le premier récepteur (A) est connecté au deuxième récepteur (B) avec un canal de transmission publique (15) pour échanger des informations notamment par le biais d'ondes radio, dans lequel le premier récepteur (A) est configuré pour

a) détecter des fragments quantiques intriqués incidents avec au moins trois réglages de détection différents A$_0$, A$_1$ et A$_2$ avec un détecteur (14-1) du premier récepteur (A),
b) générer des valeurs de mesure représentatives pour les résultats de mesure réalisés avec un du réglage de détection choisi aléatoirement A$_0$, A$_1$, A$_2$,
c) stocker les valeurs de mesure associées au réglage de détection choisi aléatoirement A$_0$, A$_1$, A$_2$ sur un stockage de données (12-1) du premier récepteur (A),

- une source d'intrication (10) configurée pour générer et distribuer des paires de fragments intriqués, notamment paires de fragments intriqués uniques, dans lequel la source d'intrication (10) est configurée pour transmettre un premier fragment intriqué de la paire de fragments intriqués au premier récepteur et un second fragment intriqué de la paire de fragments intriqués au deuxième récepteur par le biais d'un canal quantique (11), notamment dans lequel la source est une source photonique configurée pour générer des photons intriqués,
- notamment dans lequel une probabilité de détection pour des fragments quantiques intriqués distribués est inférieure à 0,95, en particulier inférieure à 0,9, plus particulièrement inférieure à 0,85 au niveau du premier et/ou du deuxième récepteur (A, B).

Fig. 1

100 — Generating entangled pairs

200 — Transmission to 1st and 2nd receiver

300 — Detection at 1st receiver

400 — Detection at 2nd receiver

1000

500 — Noisification

600 — Error Correction

700 — CHSH estimation

800 — Privacy amplification

900 — Final shared quantum key

901 — QKD-secured application

# Fig. 2

100 — Generating entangled pairs

200 — Transmission to 1st and 2nd receiver

300 — Detection at 1st receiver

400 — Detection at 2nd receiver

500 — Noisification

1000

600 — Error Correction

700 — CHSH estimation

800 — Privacy amplification

900 — Final shared quantum key

901 — QKD-secured application

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PIRONIO, STEFANO et al.** Device-Independent Quantum Key Distribution Secure Against Collective Attacks. *New Journal of Physics,* 2009, vol. 11 (4), 045021
- **EKERT, ARTUR K.** Quantum cryptography based on Bell's theorem. *Physical Review Letters,* 05 August 1991, vol. 67 (6), 661-663
- **STEFANO PIRONIO et al.** *New J. Phys.,* 2009, vol. 11, 045021
- **F. CLAUSER ; M.A. HORNE ; A. SHIMONY ; R.A. HOLT.** Proposed experiment to test local hidden-variable theories. *Phys. Rev. Lett.,* 1969, vol. 23 (15), 880-4
- **MA, XIONGFENG et al.** Postprocessing for Quantum Random-Number Generators: Entropy Evaluation and Randomness Extraction. *Physical Review A,* 2013, vol. 87 (6